Europäisches Patentamt

European Patent Office

Office européen des brevets

(19)

(11) Numéro de publication: **0 076 190**
**B1**

(12) # FASCICULE DE BREVET EUROPEEN

(45) Date de publication du fascicule du brevet:
**10.04.85**

(51) Int. Cl.⁴: **H 04 R 1/08**

(21) Numéro de dépôt: **82401678.6**

(22) Date de dépôt: **15.09.82**

(54) Ensemble mentonnière-microphone pour le port individuel d'un microphone.

(30) Priorité: **24.09.81 FR 8118060**

(43) Date de publication de la demande:
**06.04.83 Bulletin 83/14**

(45) Mention de la délivrance du brevet:
**10.04.85 Bulletin 85/15**

(84) Etats contractants désignés:
**DE GB IT NL**

(56) Documents cités:
**DE - C - 688 994**
**US - A - 2 408 474**
**US - A - 2 418 120**

(73) Titulaire: **SOCIETE INDUSTRIELLE DE LIAISONS ELECTRIQUES - SILEC, 64bis, rue de Monceau, F-75008 Paris (FR)**

(72) Inventeur: **Devoille, Roger, 3, rue de l'Abbé Rousseau, F-78000 Versailles (FR)**

(74) Mandataire: **Pinguet, André, NOVAPAT - CABINET CHEREAU 107 Boulevard Péreire, F-75017 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif de support de microphone et plus particulièrement un dispositif de port individuel de microphone.

Une transmission phonique de qualité suppose que la prise de son soit effectuée le plus près possible de la bouche. En fonction des contraintes imposées par l'environnement et par l'activité du phonateur, on a proposé d'implanter les microphones sur des supports variés tels que par exemple les combinés téléphoniques, les microphones à main ou encore les microphones sur support orientable stationnaire ou semi-stationnaire, par exemple du type à flexible à bras articulé ou à bras orientable avec tube ou rail. Ces dispositifs, s'ils permettent un positionnement convenable du microphone devant la bouche au moment des transmissions, ne permettent pas un accompagnement automatique du mouvement éventuel de la tête du phonateur, avec les inconvénients d'immobilisme afférents de ce dernier.

Quand il est nécessaire de communiquer les mains libres, il est généralement fait usage d'un microphone sur support orientable associé à un casque d'écoute. Les progrès récents de miniaturisation ont permis de rendre cet équipement de tête très léger s'il s'agit d'exploitations en milieu calme. Par contre, en milieu bruyant, l'équipement est relativement volumineux et, qui plus est, gênant. Quoi qu'il en soit, avec ce type de support de microphone associé à un casque, le bras de support de microphone est sujet à des dérèglements fréquents, nonobstant sa faible inertie, lorsque l'utilisateur se déplace fréquemment ou évolue dans un milieu riche en vibrations ou en chocs, comme c'est le cas par exemple dans des véhicules. D'autre part, ce type de support présente également l'inconvénient de fréquemment s'accrocher à divers objets environnant la tête de l'utilisateur avec les problèmes de dérèglement afférents non seulement du microphone, mais également du casque d'écoute. On a également proposé de rapporter un microphone à l'intérieur d'un casque intégral, en s'inspirant des techniques de l'aviation, tel que celui divulgué dans le brevet US-A No 2408474. Toutefois, ce dernier type de montage d'une part ne vaut qu'avec une certaine catégorie de casques bien particulière non homologuée dans bien des domaines et de port lourd et pénible, d'autre part ne permet pas véritablement un positionnement correct du microphone devant la bouche du phonateur, quelle que soit la morphologie de ce dernier.

La présente invention a précisément pour objet de proposer un dispositif de port individuel de microphone évitant les inconvénients susmentionnés, de structure simple, de coût réduit, d'utilisation pratique, garantissant un positionnement correct du microphone devant la bouche de l'utilisateur quelles que soient les conditions de travail de ce dernier, sans en outre induire de charge ou de dérèglement sur un casque d'écoute utilisé conjointement, ce dernier pouvant être de tout type commercialement disponible.

Pour ce faire, selon l'invention, il est proposé un ensemble mentonnière/microphone pour le port individuel d'un microphone comportant une coque de mentonnière et un microphone, la coque de mentonnière comprenant des moyens de solidarisation à une sangle jugulaire et caractérisé en ce que la coque de mentonnière est conformée pour emboîter le menton et en ce que le microphone est monté de façon qu'il s'étende en saillie vers l'extérieur par rapport au côté frontal de la coque.

Cet ensemble mentonnière/microphone convient tout particulièrement aux matériels de communication, à terre ou sur véhicule, aériens, terrestres ou marins, tant dans les secteurs civils que militaires. Cet agencement se caractérise par une grande souplesse d'utilisation et par un port confortable, et autorise toute latitude de déplacement de l'utilisateur même en milieu confiné ou sur des véhicules.

D'autres caractéristiques et avantages de la présente invention ressortiront de la description suivante de modes de réalisation, donnés à titre illustratif mais nullement limitatif, faite en relation avec les dessins annexés, sur lesquels:

les fig. 1 et 2 représentent des vues respectivement de côté et de dessus d'un premier mode de réalisation de l'ensemble mentonnière/microphone selon l'invention;

les fig. 3 et 4 sont des vues identiques à celles des fig. 1 et 2 montrant l'ensemble équipé d'un cache pare-vent;

les fig. 5 et 6, similaires aux fig. 1 et 2, représentent respectivement en vue de côté et en vue de dessus un second mode de réalisation de l'ensemble mentonnière/microphone selon l'invention, et

la fig. 7 est une vue analogue à la fig. 5 montrant l'ensemble équipé d'un cache pare-vent.

Sur les dessins et dans la description qui va suivre, les éléments identiques ou analogues portent les mêmes chiffres de référence.

Comme représenté sur les figures, l'ensemble selon l'invention comprend essentiellement une coque de mentonnière 1, un support de microphone 2 et un microphone 3. La coque de mentonnière 1 est réalisée en matériau plastique moulé sous pression et conformé pour épouser ou emboîter un menton, c'est-à-dire qu'il présente une allure concave définissant une cavité intérieure de réception de menton garnie avantageusement d'un revêtement de confort 4 et dont la paroi est pourvue d'un certain nombre d'orifices d'aération 5. Sur une des faces frontales principales de la coque 1 est fixé, par exemple au moyen de rivets 6, un support de microphone 2 en matériau plastique et comprenant une partie de plaque de montage courbe 7 appliquée sur la paroi extérieure de la coque 1. Cette dernière comprend, au voisinage de ses extrémités latérales opposées, au moins deux orifices traversants 8 permettant le passage de brins de sangle jugulaire maintenus guidés par des nervures transversales, la mentonnière pouvant ainsi coulisser sur cette sangle afin de permettre le réglage de l'ensemble conformément à la morphologie de l'utilisateur.

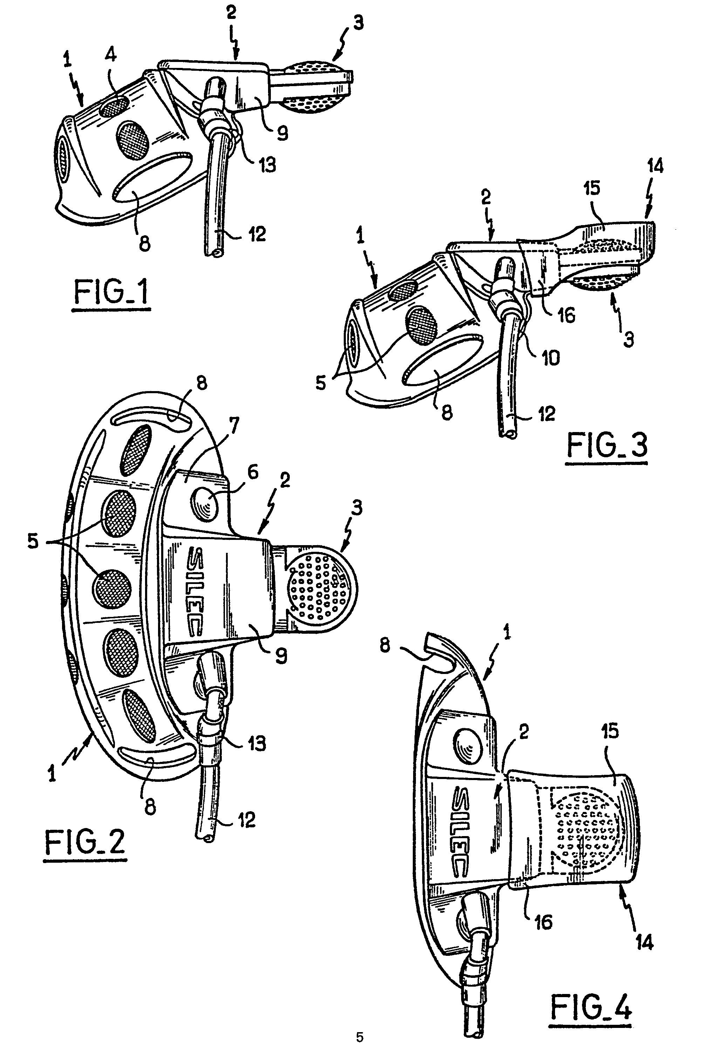

Dans le mode de réalisation des fig. 1 à 4, le microphone 3 est un microphone bidirectionnel plat du type piézocéramique avec ou sans amplificateur intégré. Dans ce cas, le support 2 de microphone comprend un corps troncpyramidal 9 dimensionné de façon que le microphone 3 fasse saillie par rapport au bord frontal antérieur 10 de la coque 1 en s'étendant suivant un angle par rapport au plan médian de la coque 1 afin de placer le microphone 3 en regard de la bouche de l'utilisateur ayant son menton emboîté dans la coque de mentonnière 1.

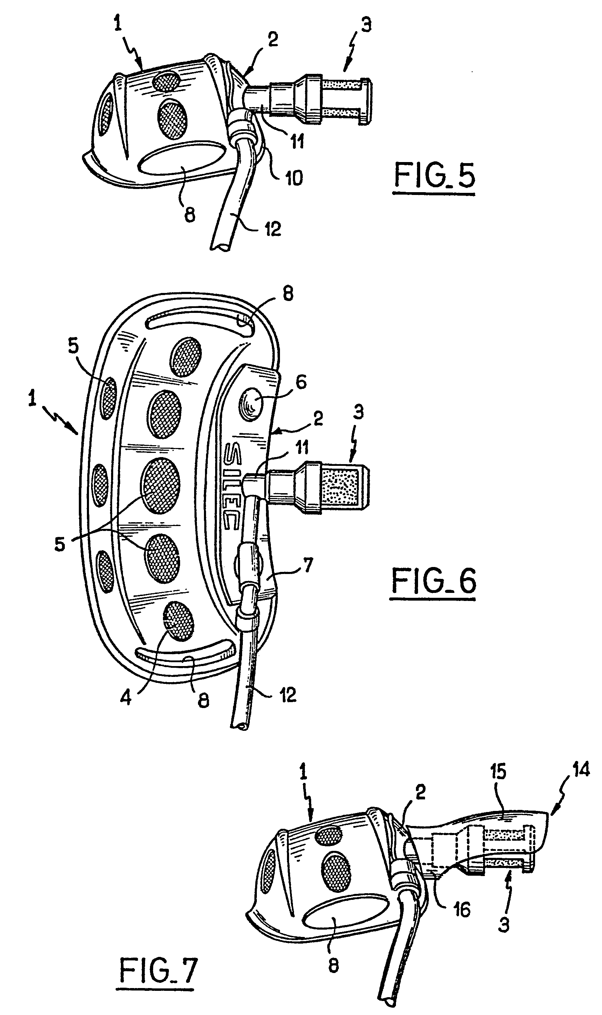

Dans le mode de réalisation des fig. 5 à 7, le microphone 3 est un microphone bidirectionnel cylindrique du type à électret et le support du microphone 2 comprend un fût cylindrique 11 coaxial au microphone 3 et raccordant celui-ci à la plaque de montage 7 pour situer le microphone de la même façon que précédemment. Dans les différents modes de réalisation, le cordon 12 du microphone 3 s'échappe latéralement du support de microphone 2 et est bridé en 13 sur la coque 1.

Conformément à un aspect de la présente invention, pour les utilisations de l'ensemble mentonnière/microphone dans un environnement perturbé par le vent ou à proximité d'une source de bruit, il est prévu un cache pare-vent 14 comprenant une partie d'extrémité semi-ouverte 15 entourant partiellement le microphone 3 et occultant toute la face de ce dernier opposée à la face intérieure dirigée vers la bouche de l'utilisateur. Le cache pare-vent 14 peut être réalisé d'une seule pièce avec le support de microphone 2. Toutefois, de préférence, le cache pare-vent 14 sera amovible en étant réalisé en un matériau élastique, par exemple en caoutchouc, en présentant, pour son montage sur le support de microphone 2, une partie d'extrémité fermée formant gaine 16 emmanchable sur le support 2.

Quoique la présente invention ait été décrite en relation avec des modes de réalisation particuliers, elle ne s'en trouve pas limitée, mais est au contraire susceptible de modifications et de variantes qui apparaîtront à l'homme de l'art.

## Revendications

1. Ensemble mentonnière/microphone pour le port individuel d'un microphone comportant une coque de mentonnière et un microphone, la coque de mentonnière (1) comprenant des moyens de solidarisation à une sangle jugulaire et caractérisé en ce que la coque de mentonnière (1) est conformée pour emboîter le menton et en ce que le microphone est monté de façon qu'il s'étende en saillie vers l'extérieur par rapport au côté frontal (10) de la coque.

2. Ensemble selon la revendication 1, caractérisé en ce que le microphone (3) est monté sur un support de microphone (2) rapporté sur la face externe de la coque de mentonnière (1).

3. Ensemble selon la revendication 2, caractérisé en ce qu'il comprend un cache pare-vent (14) entourant partiellement le microphone (3).

4. Ensemble selon la revendication 3, caractérisé en ce que le cache pare-vent (14) est amovible.

5. Ensemble selon la revendication 4, caractérisé en ce que le cache pare-vent (14) est réalisé en matériau élastique et est conformé pour être emmanché sur le support de microphone (2).

6. Ensemble selon l'une des revendications précédentes, caractérisé en ce que les moyens de solidarisation comprennent deux orifices traversants (8) au voisinage des extrémités latérales opposées de la coque de mentonnière (1) pour permettre l'enfilage d'au moins un brin de sangle.

7. Ensemble selon l'une des revendications précédentes, caractérisé en ce que la coque de mentonnière (1) est en matériau plastique moulé.

8. Ensemble selon l'une des revendications précédentes, caractérisé en ce que la cavité de la coque de mentonnière (1) est revêtue d'une garniture de confort (4).

9. Ensemble selon l'une des revendications précédentes, caractérisé en ce qu'il comprend un microphone (3) cylindrique du type à électret.

10. Ensemble selon l'une des revendications 1 à 8, caractérisé en ce qu'il comprend un microphone (3) plat, du type piézocéramique.

## Patentansprüche

1. Kinnband/Mikrofon-Einheit zum individuellen Tragen eines Mikrofons, mit einer Kinnbandschale und einem Mikrofon, wobei die Kinnbandschale (1) eine Befestigungsanordnung für einen Kinngurt aufweist, dadurch gekennzeichnet, dass die Kinnbandschale (1) geformt ist zur Aufnahme des Kinns und dass das Mikrofon derart angeordnet ist, dass es sich nach aussen bezüglich der Vorderseite (10) der Schale erstreckt.

2. Einheit nach Anspruch 1, dadurch gekennzeichnet, dass das Mikrofon (3) auf einer Mikrofonhalterung (2) angeordnet ist, die an der Aussenseite der Kinnbandschale (1) befestigt ist.

3. Einheit nach Anspruch 2, dadurch gekennzeichnet, dass sie einen Luftdruckschutzschild (14) aufweist, der das Mikrofon (3) teilweise umgibt.

4. Einheit nach Anspruch 3, dadurch gekennzeichnet, dass der Luftdruckschutzschild (14) abnehmbar ist.

5. Einheit nach Anspruch 4, dadurch gekennzeichnet, dass der Luftdruckschutzschild (14) aus einem elastischen Material besteht und so geformt ist, dass er auf die Mikrofonhalterung (2) geschoben werden kann.

6. Einheit nach einem der vorhergehenden Ansprüche, dadurch gekennzeichnet, dass die Befestigungsanordnung zwei Queröffnungen (8) aufweist in der Nähe der seitlichen, der Kinnbandschale (1) gegenüberliegenden Enden, um das Einfädeln wenigstens eines Gurtteils zu ermöglichen.

7. Einheit nach einem der vorhergehenden Ansprüche, dadurch gekennzeichnet, dass die Kinnbandschale (1) aus gegossenem Kunststoff besteht.

8. Einheit nach einem der vorhergehenden Ansprüche, dadurch gekennzeichnet, dass die Aussparung der Kinnbandschale (1) mit einem Polstermaterial (4) beschichtet ist.

9. Einheit nach einem der vorhergehenden Ansprüche, dadurch gekennzeichnet, dass sie ein zylindrisches Elektret-Mikrofon (3) aufweist.

10. Einheit nach einem der Ansprüche 1 bis 8, dadurch gekennzeichnet, dass sie ein flaches piezokeramisches Mikrofon (3) aufweist.

## Claims

1. A chinpiece/microphone assembly to enable an individual to wear a microphone, comprising a chinpiece shell and a microphone, the chinpiece shell (1) having means for anchoring to a chin strap, and characterised in that the chinpiece shell (1) is shaped to encase the chin and in that the microphone is mounted in such a way that it extends as a projection towards the exterior in relation to the front side (10) of the shell.

2. Assembly according to Claim 1, characterised in that the microphone (3) is mounted on a microphone support (2) fitted onto the external face of the chinpiece shell (1).

3. Assembly according to Claim 2, characterised in that it has a windshield cover (14) partially surrounding the microphone (3).

4. Assembly according to Claim 3, characterised in that the windshield cover is removable.

5. Assembly according to Claim 4, characterised in that the windshield cover (14) is made of a resilient material and is shaped to be attached onto the microphone support (2).

6. Assembly according to one of the preceding claims, characterised in that the means of anchoring comprise two through openings (8) near the opposite lateral ends of the chinpiece shell (1), to permit threading through of at least one strap end.

7. Assembly according to one of the preceding claims, characterised in that the chinpiece shell (1) is of moulded plastics material.

8. Assembly according to one of the preceding claims, characterised in that the recess of the chinpiece shell (1) is fitted with a lining (4) for comfort.

9. Assembly according to one of the preceding claims, characterised in that it comprises a cylindrical microphone (3) of electret type.

10. Assembly according to one of Claims 1 to 8, characterised in that it comprises a flat microphone (3), of piezo-ceramic type.

FIG_1

FIG_2

FIG_3

FIG_4

FIG. 5

FIG. 6

FIG. 7